# EUROPÄISCHE PATENTANMELDUNG

(11) **EP 0 563 682 A1**
(43) Veröffentlichungstag der Anmeldung: **06.10.1993**
(21) Anmeldenummer: 93104336.8
(22) Anmeldetag: 17.03.1993
(51) Int. Cl.: C08G 18/66

(54) **Verfahren zur Herstellung von kalthärtenden Polyurethan-Weichformschaumstoffen**

(30) Priorität: 30.03.1992 DE 4210362
(71) Anmelder: BAYER AG, 51368 Leverkusen (DE)
(72) Erfinder: Gansen, Peter, Dr., W-5000 Köln 80 (DE)

(57) **Zusammenfassung**

Kalthärtende Polyurethan-Weichformschaumstoffe werden durch Umsetzung von
a) aromatischen Polyisocyanaten mit
b) Verbindungen mit mindestens zwei gegenüber Isocyanaten aktiven Wasserstoffatomen vom Molekulargewicht 400 bis 14000 und gegebenenfalls
c) Kettenverlängerung- und Vernetzungsmittel mit mindestens zwei gegenüber Isocyanaten aktiven Wasserstoffatomen vom Molekulargewicht 32 bis 399 in Gegenwart von
d) Wasser als Treibmittel und gegebenenfalls in Gegenwart von
e) anderen Treibmitteln, Katalysatoren und weiteren an sich bekannten Hilfs- und Zusatzmitteln
in einer geschlossenen Form hergestellt, indem als Komponente b) ein Gemisch enthaltend
1) 5 bis 30 Gew.-% einer handelsüblichen Margarine
2) 70 bis 95 Gew.-% eines mindestens zwei Hydroxylgruppen aufweisenden Polyethers einer OH-Zahl von 14 bis 50 und einem Ethylenoxid-Gehalt von 5 bis 25 Gew.-% (bezogen auf Gesamtalkylenoxid)
verwendet wird, als Komponente d) Wasser in einer Menge von 2 bis 6 Gew.-%, eingesetzt wird (bezogen auf Komponente b); in der Margarine vorhandenes Wasser wird mitberücksichtigt) und die Umsetzung bei einer Kennzahl von 80 bis 120 erfolgt.

## Beschreibung

Kalthärtende Polyurethan-Weichschaumstoffe finden bekanntlich eine sehr verbreitete Anwendung und werden u.a. in der Möbel- und Automobilindustrie genutzt.

Die Direkthinterschäumung von Textilien beziehungsweise von Weichschaum-kaschierten Textilien ist besonders rationell, da das nachträgliche Beziehen der Formschaumkörper entfallt. Insbesondere bei Kleinteilen wie Kopfstützen und Armlehnen wird dieses Verfahren zur Zeit angewendet. Das Eindringen der reaktiven PUR-Mischung kann dabei auf zwei Arten verhindert werden. Zum einen wird das Textil beziehungsweise die Schaumstoffkaschierung mit einer dichten Folie versiegelt. Nachteilig dabei ist der zusätzliche Verfahrensschritt, der das so vorbehandelte Textil verteuert. Die zweite Möglichkeit, ein Eindringen der reagierenden Mischung in das Textil oder die Kaschierung zu verhindern, besteht darin, die Viskosität der reaktiven Mischung bei Austritt aus dem Mischkopf zu erhöhen. Üblicherweise geschieht dies durch eine deutliche Erhöhung der Katalyse, die das gewünschte frühzeitige Ansteigen der Reaktionsmischungsviskosität bewirkt.

Überraschenderweise wurde nun gefunden, daß durch Mitverwendung von Margarine in der Polyolformulierung der gleiche Effekt erzielt werden kann, Die Margarine verhält sich dabei als Thixotropierungsmittel. Margarine enthaltende Polyole lassen sich auf sogenannten Hochdruckmaschinen gut verarbeiten, bei Austritt aus dem Mischkopf steigt die Viskosität an und das reaktive Gemisch dringt nicht in Kaschierungen beziehungsweise Textilien ein. Das mechanische Werteniveau von solcherart hergestellten Schaumstoffen ist verglichen mit Standardschaumstoffen nicht negativ beeinflußt. Die in der Margarine enthaltenen Zusatzstoffe hingegen haben offenbar eine katalytische Wirkung, so daß die sog. Entformzeit sinkt.

Der Einsatz von Fetten und Ölen in Formulierungen als Weichmacher ist zwar grundsätzlich bekannt. Der erfindungsgemäße Einsatz von Margarine hingegen ist neu. Gegenstand der Erfindung ist ein Verfahren zur Herstellung von kalthärtenden Polyurethan-Weichformschaumstoffen durch Umsetzung von:
a) aromatischen Polyisocyanaten mit
b) Verbindungen mit mindestens zwei gegenüber Isocyanaten aktiven Wasserstoffatomen vom Molekulargewicht 400 bis 14000 und gegebenenfalls
c) Kettenverlängerungs- und Vernetzungsmittel mit mindestens zwei gegenüber Isocyanaten aktiven Wasserstoffatomen vom Molekulargewicht 32 bis 399 in Gegenwart von
d) anderen Treibmitteln, Katalysatoren und weiteren an sich bekannten Hilfs- und Zusatzmitteln
in einer geschlossenen Form, dadurch gekennzeichnet, daß als Komponente b) ein Gemisch enthaltend
1) 5 bis 30 Gew.-% einer handelsüblichen Margarine
2) 70 bis 95 Gew.-% eines mindestens zwei Hydroxylgruppen aufweisenden Polyethers einer OH-Zahl von 14 bis 50 und einem Ethylenoxid-Gehalt von 5 bis 25 Gew.-% (bezogen auf Gesamtalkylenoxid)
verwendet wird, daß als Komponente d) Wasser in einer Menge von 2 bis 6 Gew.-%, eingesetzt wird (bezogen auf Komponente b); in der Margarine vorhandenes Wasser wird mitberücksichtigt) und daß die Umsetzung bei einer Kennzahl von 80 bis 120 erfolgt.

Erfindungsgemäß bevorzugt ist, daß
- als Komponente b1) Margarine mit einem Wassergehalt von 15 % bis 20 % Gew.-% eingesetzt wird, und
- die Komponente b2) mit einem Polyisocyanat ganz oder teilweise zu einem Semiprepolymer oder Prepolymer umgesetzt wird.

Erfindungsgemäß bevorzugt ist ferner, daß
- als Komponente a) Polyisocyanate vom Typ des Diphenylmethandiisocyanats verwendet werden,
- die Komponente b2) mit dem Polyisocyanat in einer Vorreaktion ganz oder teilweise zu einem Semiprepolymer oder Prepolymer umgesetzt wird, und
- die Funktionalität der Komponente b)2. zwischen 3 und 6 liegt.

Zur Herstellung der Polyurethan-Weichformschaumstoffe werden erfindungsgemäß als Ausgangskomponenten verwendet:
a) aromatische Polyisocyanate vom Typ des Diphenylmethandiisocyanats und/oder des Toluylendiisocyanats, z.B. das 2,4- und 2,6-Toluylendiisocyanat, sowie beliebige Gemische dieser Isomeren ("TDI"); 4,4'- und/oder 2,4'-Diphenylmethandiisocyanat (MDI), Polyphenylpolymethylen-polyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen oder Biuretgruppen modifizierte Polyisocyanate, die sich vom 2,4- und/oder 2,6-Toluylendiisocyanat bzw. vom 4,4'- und/oder 2,4'-Diphenylmethandiisocyanat ableiten, ferner alkylsubstituierte MDI-Typen, wie sie beispielsweise in DE-OS 2 935 318, DE-OS 3 032 128 und DE-OS 3 032 358 beschrieben werden.
   Als erfindungsgemäß einzusetzende Polyisocyanate kommen vorzugsweise folgende MDI-Typen in Betracht:
   a) Diphenylmethandiisocyanate im Gemisch mit Polyphenyl-polymethylen-polyisocyanaten, wobei der Anteil des Polyphenylpolymethylen-polyisocyanats 0 bis 40 Gew`-% und der Gehalt an Diphenylmethandiisocyanat-Isomeren 100 bis 60 Gew.-% betragen kann.
   b) Urethanmodifizierte aromatische Di-/Poly-isocyanate mit einem NCO-Gehalt von 15 bis 30 Gew.-%, welche erhalten werden durch Umsetzung einer wie unter a) beschriebenen Mischung aus Diphenylmethandiisocyanaten und Polyphenyl-polymethylen-polyisocyanaten mit einer Hydroxylverbindung, gegebenenfalls auch mehreren Hydroxylverbindungen, deren Funktionalität 2 bis 6 beträgt.
   c) Gemische der unter a) und/oder b) bezeichneten MDI-Produkte mit maximal 25 Gew.-% aliphatischen, cycloaliphatischen, heterocyclischen oder weiteren andersartigen aromatischen Polyisocyanaten, wie sie z.B. von W. Siefken in Justus Liebigs Annalen der Chemie, 562, Seiten 75 bis 136, beschrieben werden.
   Ferner kommen vorzugsweise folgende TDI-Typen erfindungsgemäß in Betracht:
   - Toluylendiisocyanat als Gemisch der 2,4- und 2,6-Isomeren im Verhaltnis 80 : 20 (T 80)
   - Toluylendiisocyanat als Gemisch der 2,4- und 2,6-Isomeren im Verhaltnis 65 : 35 (T 65)
   - Toluylendiisocyanat-Prepolymere
   - Abmischungen von TDI mit Diphenylmethandiisocyanat und/oder Polyphenylpolymethylen-polyisocyanaten.
b) Erfindungsgemäß wird ferner das schon beschriebene spezielle Polyolgemisch eingesetzt. Die handelsübliche Margarine hat in der Regel eine Zusammensetzung, wie sie im Römpp Chemie Lexikon, 9. Auflage, Bd. 4, S. 2637, beschrieben wird.
c) Gegebenenfalls mitverwendet werden Verbindungen mit mindestens zwei gegenüber Isocyanaten reaktionsfähigen Wasserstoffatomen und einem Molekulargewicht von 32 bis 399. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10 bis 20, beschrieben.
d) Wasser wird als Treibmittel in einer Menge von 2 bis 6 Gew.-%, vorzugsweise 2 bis 3 Gew.-%, bezogen auf Komponente b) eingesetzt.
e) Gegebenenfalls werden Hilfs- und Zusatzmittel mitverwendet wie
   a) leicht flüchtige organische Substanzen als weitere Treibmittel,
   b) Reaktionsbeschleuniger und Reaktionsverzögerer der an sich bekannten Art in der an sich üblichen Mengen,
   c) oberflächenaktive Zusatzstoffe, wie Emulgatoren und Schaumstabilisatoren, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistastisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 bis 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistastisch und bakteriostatisch wirksamen Substanzen sowie Einzelheiten über Verwendungs- und Wirkungsweise dieser Zusatzmittel sind im Kunststoff-Handbuch, Band VII, herausgegeen von Vieweg und Höchtlen, Carl-Hanser-Verlag, München 1966, z.B. auf den Seiten 103 bis 113, beschrieben.

Durchführung des erfindungsgemäßen Verfahrens.

Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Die Umsetzung aller Komponenten erfolgt erfindungsgemäß bei einer Kennzahl von 80 bis 120, vorzugsweise bei einer Kennzahl von 95 bis 105.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, beziehungsweise die theoretisch notwendige Menge an Isocyanat benutzt wurde. Mit Hilfe der Kennzahl ist es also möglich, den Grad der Unter- oder Übervernetzung näher zu definieren. Die Kennzahl errechnet sich nach der allgemeinen Formel wie folgt: 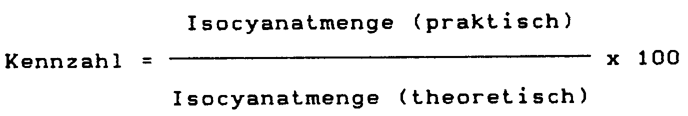
Erfindungsgemäß wird die Verschäumung in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt- Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Die erfindungsgemäß erhältlichen Polyurethan-Weichformschaumstoffe finden z.B. Anwendung als Armaturentafeln, Armlehnen (auch PKW-Lehnen), Liege- und Sitzmöbel, Kopfstützen, Sitze in Verkehrsmitteln, vorzugsweise im Auto.

### Beispiel 1

100 Gew.-Teile der A-Komponente werden mit 45,9 Gew.-Teilen der B-Komponente intensiv vermischt (Kennzahl 85). Die Reaktionsmischung wird in eine auf 50°C erwärmte, quaderförmige Metallform eingebracht auf deren Boden sich ein mit offenzelligem Schaum kaschiertes Textil befindet. Die Form wird mit einem Metalldeckel geschlossen und die Reaktionsmischung schäumt auf.

### A-Komponente

| | |
|---|---|
| Bayfit® 3973 Y, Polyetherpolyol der OH-Zahl 28 (Handelsprodukt der Bayer AG) | 90 Gew.-Teile |
| Handelsübliche Margarine (Wassergehalt 19 Gew.-%) | 10 Gew.-Teile |
| Wasser | 3,2 Gew.-Teile |
| Bisdimethylaminoethylether (70 %ig in Dipropylenglykol) | 0,15 Gew.-Teile |
| Triethylendiamin (33 %ig in Dipropylenglykol) | 0,40 Gew.-Teile |
| Tegostab® B 4113 (Handelsprodukt der Goldschmidt AG) | 0,6 Gew.-Teile |
| Desmophen® 7040 N, Polyetherpolyol der OH-Zahl 28 (Handelsprodukt der Bayer AG) | 2,0 Gew.-Teile |

### B-Komponente

| | |
|---|---|
| MDI 85/25 | Gemisch aus 60 Gew.-% 4,4'-, 25 Gew.-% 2,4'-Diisocyanatdiphenylmethan und 15 Gew.-% höherfunktionellen Polyisocyanaten der Diphenylmethanreihe. |

Nach dem Entformen zeigt das Textil keine Durchschläge der reaktiven Mischung. Der sich ergebende Polyurethan-Weichformschaumstoff hat folgende mechanische Eigenschaften:

| | | |
|---|---|---|
| Rohdichte | (g/l) | 55 |
| Stauchhärte 40 % | (kPa) | 5,5 |
| Bruchdehnung | (%) | 123 |
| Zugfestigkeit | (kPa) | 147 |
| Druckverformungsrest 50 | (%) | 3,8 |
| Druckverformungsrest 75 | (%) | 5,6 |

| Heißluftalterung 14 d, 125°C | |
|---|---|
| Änderung der Zugfestigkeit | -14 % |
| Änderung der Stauchhärte | -34 % |

Mit dem Basispolyol Bayfit 3973 Y und der Margarine/Polyol-Abmischung aus Beispiel 1 wurden in einem Brookfield-Viskosimeter bei 25°C Viskositätsmessungen durchgeführt.

| Drehzahl | Bayfit 3973 Y | Margarine/Polyol |
|---|---|---|
| 5,66 min⁻¹ | 1.100 mPa.s | 2.800 mPa.s |
| 22,6 min⁻¹ | 1.050 mPa.s | 2.100 mPa.s |

Während man bei reinem Polyol nur einen geringen Thixotronieeffekt beobachtet, ist dieser bei der Margarine-Abmischung deutlich ausgeprägt.

### Beispiel 2

100 Gew.-Teile der A-Komponente werden mit 43,1 Gew.-Teilen der B-Komponente intensiv vermischt (Kennzahl 100). Die Reaktionsmischung wird in eine auf 50°C erwärmte, quaderförmige Metallform eingebracht. Die Form wird mit einem Metalldeckel geschlossen und die Reaktionsmischung schäumt auf.

### A-Komponente

| | |
|---|---|
| Sorbit-gestarteter EO/PO-Polyether der OH-Zahl 28 | 25 Gew.-Teile |
| Trimethylolpropan-gestarteter EO/PO-Polyether der OH-Zahl 28 | 40 Gew.-Teile |
| Bayfit® 3619 X, gefüllter Polyether der OH-Zahl 28 (Handelsprodukt der Bayer AG) | 25 Gew.-Teile |
| Handelsübliche Margarine | 10 Gew.-Teile |
| Wasser | 2,5 Gew.-Teile |
| Bisdimethylaminoethylether (70 %ig in Dipropylenglykol) | 0,15 Gew.-Teile |
| N-Dimethylaminopropylformamid | 0,5 Gew.-Teile |
| Diethanolamin | 1,0 Gew.-Teile |

### B-Komponente

MDI 85/25
Der sich ergebende PUR-Weichformschaumstoff hat folgende mechanische Eigenschaften:

| | | |
|---|---|---|
| Rohdichte | (g/l) | 55 |
| Stauchhärte | (kPa) | 3,65 |

## Patentansprüche

1. Verfahren zur Herstellung von kalthärtenden Polyurethan-Weichformschaumstoffen durch Umsetzung von
a) aromatischen Polyisocyanaten mit
b) Verbindungen mit mindestens zwei gegenüber Isocyanaten aktiven Wasserstoffatomen vom Molekulargewicht 400 bis 14000 und gegebenenfalls
c) Kettenverlängerung- und Vernetzungsmittel mit mindestens zwei gegenüber Isocyanaten aktiven Wasserstoffatomen vom Molekulargewicht 32 bis 399 in Gegenwart von
d) Wasser als Treibmittel und gegebenenfalls in Gegenwart von
e) anderen Treibmitteln, Katalysatoren und weiteren an sich bekannten Hilfs- und Zusatzmitteln
in einer geschlossenen Form, dadurch gekennzeichnet, daß als Komponente b) ein Gemisch enthaltend
1) 5 bis 30 Gew.-% einer handelsüblichen Margarine
2. 70 bis 95 Gew.-% eines mindestens zwei Hydroxylgruppen aufweisenden Polyethers einer OH-Zahl von 14 bis 50 und einem Ethylenoxid-Gehalt von 5 bis 25 Gew.-% (bezogen auf Gesamtalkylenoxid)
verwendet wird, daß als Komponente d) Wasser in einer Menge von 2 bis 6 Gew.-%, eingesetzt wird (bezogen auf Komponente b); in der Margarine vorhandenes Wasser wird mitberücksichtigt) und daß die Umsetzung bei einer Kennzahl von 80 bis 120 erfolgt.

2. Verfahren gemäß Anspruch 1, dadurch gekennzeichnet, daß als Komponente b1) Margarine mit einem Wassergehalt von 15 % bis 20 % Gew.-% eingesetzt wird.

3. Verfahren gemäß Anspruch 1 und 2, dadurch gekennzeichnet, daß die Komponente b2) mit dem Polyisocyanat ganz oder teilweise zu einem Semiprepolymer oder Prepolymer umgesetzt wird.

4. Verfahren gemäß Ansprüchen 1 bis 3, dadurch gekennzeichnet, daß als Komponente a) Polyisocyanate vom Typ des Diphenylmethandiisocyanats verwendet werden.

5. Verfahren gemäß Ansprüchen 1 bis 4, dadurch gekennzeichnet, daß die Umsetzung bei einer Kennzahl von 95 bis 105 erfolgt.

6. Verfahren gemäß Ansprüchen 1 bis 5, dadurch gekennzeichnet, daß die Funktionalität der Komponente b2) zwischen 3 und 6 liegt.
